# EUROPEAN PATENT APPLICATION

(11) **EP 2 000 246 A1**
(43) Date of publication of application: **10.12.2008**
(21) Application number: 07850024.6
(22) Date of filing: 04.12.2007
(51) Int. Cl.: B23K 9/095, B23K 9/10, B23K 9/12

(54) **WELDING APPARATUS**

(30) Priority: 19.03.2007 JP 2007070168
(71) Applicant: Panasonic Corporation, Kadoma-shi Osaka 571-8501 (JP)
(72) Inventor: IHARA, Hideki, Chuo-ku, Osaka-shi, Osaka 540-6207 (JP); TSUCHIYA, Yasuzo, Chuo-ku, Osaka-shi, Osaka 540-6207 (JP); MATSUMOTO, Kazunori, Chuo-ku, Osaka-shi, Osaka 540-6207 (JP); TANAKA, Yoshiaki, Chuo-ku, Osaka-shi, Osaka 540-6207 (JP)
(74) Representative: Schwabe - Sandmair - Marx
(86) International application number: PCT/JP2007/073374
(87) International publication number: WO 2008/114478

(57) **Abstract**

Welding device (50) has welding source (6) and welding-source peripheral device (1). Welding source (6) has welding-source-side storage section (7) for storing a welding condition item and transmitter (8) for transmitting the welding condition item. On the other hand, welding-source peripheral device (1) has receiver (2) for receiving the welding condition item; peripheral-device-side storage section (3) for storing the welding condition item; display (4) for displaying the welding condition item; and selecting section (5) for selecting a proper item from the welding condition item. The structure above allows welding device (50) to be connected to various types of welding source (6).

## Description

### TECHNICAL FIELD

The present invention relates to a welding device having a welding source and a welding-source peripheral device.

### BACKGROUND ART

A conventional welding device has a welding source and a welding-source peripheral device. The welding source transmits to the peripheral device a huge data table having a unified voltage value and a device-identification signal for identifying the type of the welding source. Such a welding device is introduced in patent reference 1 (see Japanese Unexamined Patent Application Publication No. 2000-334566).

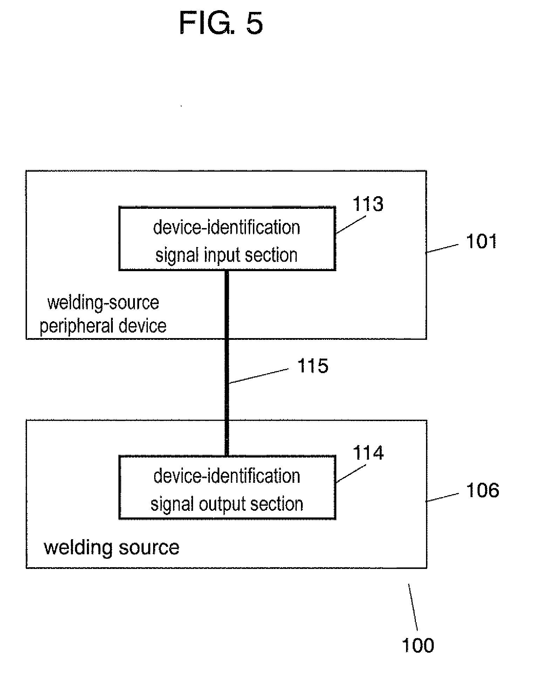

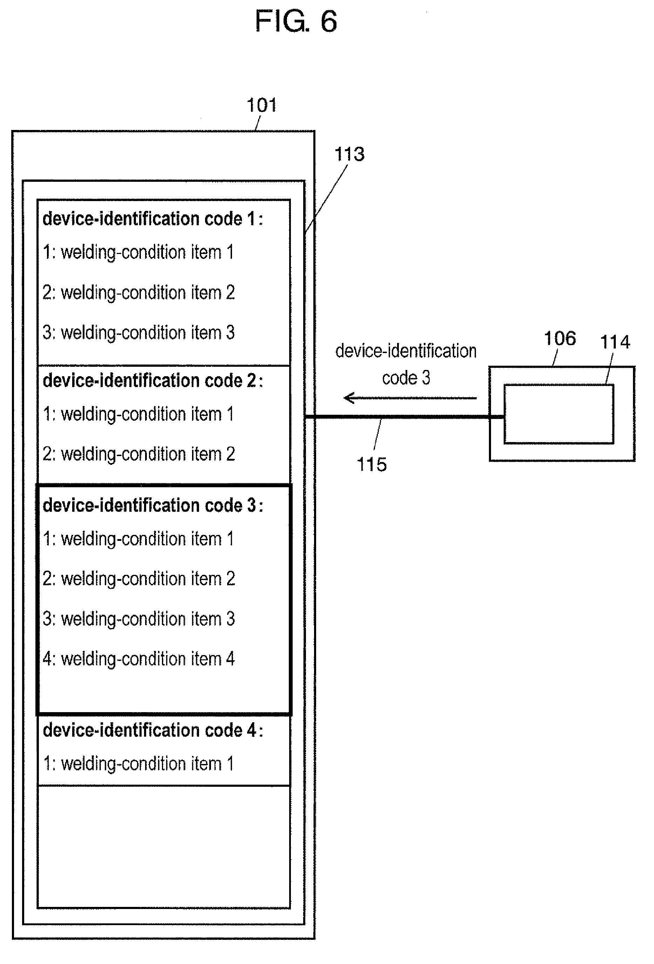

An example of conventional welding devices will be described with reference to Fig. 5 and Fig. 6. As shown in Fig. 5, welding device 100 has welding source 106 and welding-source peripheral device 101 (hereinafter, peripheral device 101). Peripheral device 101 communicates with welding source 106 via communication path 115. Peripheral device 101 has device-identification signal input section 113 (hereinafter, input section 113); on the other hand, welding source 106 has device-identification signal output section 114 (hereinafter, output section 114).

Input section 113 has a plurality of data sets of a device-identification code and welding condition items, as shown in Fig. 6. The device-identification code corresponds to the device-identification signal. The welding condition items include the following items: a welding method; a welding material; a diameter of a welding wire; a welding pulse; or wire extension of the welding wire. Welding source 106 transmits to peripheral device 101 a device-identification code fed from output section 114. Receiving the device-identification code from welding source 106, peripheral device 101 checks the code against the device-identification codes stored in input section 113 and determines welding condition items of welding source 106 connected to peripheral device 101. Besides, the determined welding condition items are shown on a display (not shown), which allows the operator to set welding conditions.

Specifically, as shown in Fig. 6, input section 113 stores device-identification codes 1 through 4 and welding condition items associated with each identification code. For example, when device-identification code 3 is received from welding source 106, peripheral device 101 determines the welding conditions associated with device-identification code 3.

In welding device 100 having welding source 106 and peripheral device 101, since input section 113 stores in advance welding condition items associated with the device-identification codes, suitable welding condition items are selected according to a device-identification code fed from welding source 106. If welding source 106 whose device-identification code is not stored in input section 113 is connected to peripheral device 101, an unknown device-identification code is fed into peripheral device 101 from welding source 106; peripheral device 101 has no data on the device-identification code and accordingly, no welding condition items associated with the code. In this case, welding condition items of the unknown welding source cannot be determined, so that a welding is not carried out. For example, when welding source 106 having device-identification code 5 is connected to peripheral device 101 in Fig. 6, peripheral device 101 has no data on device-identification code 5 and accordingly, no welding condition items associated with the code. Therefore, welding condition items suitable for welding source 106 cannot be determined, so that the welding with the use of welding source 106 is not carried out.

In conventional welding device 100, each time the aforementioned problem occurs, a repair people has to go to the location of peripheral device 101 to update the data in input section 113; a new device-identification code and welding condition items associated with the new code are additionally stored in peripheral device 101.

Unless the data stored in input section 113 is not updated, new type of welding source 106 or new-function-added welding source 106 cannot be employed for welding. Production lines have a difficulty in introducing welding source 106 of a new type or with new welding conditions added.

Patent reference 1: Japanese Unexamined Patent Application Publication No.2000-334566

### SUMMARY OF THE INVENTION

The present invention provides a welding device in which a welding source outputs a welding condition item workable on the welding source to a welding-source peripheral device so that the peripheral device carries out setting of the welding condition item.

A welding device of the present invention has a welding source and a welding-source peripheral device. The welding source includes a welding-source-side storage section for storing a welding condition item and a transmitter for transmitting the welding condition item stored in the welding-source-side storage section to the welding-source peripheral device. On the other hand, the welding-source peripheral device includes a receiver for receiving the welding condition item fed from the transmitter; a peripheral-device-side storage section for storing the welding condition item received by the receiver; a display for displaying the welding condition item stored in the peripheral-device-side storage section; and a selecting section for selecting the welding condition item shown on the display. Such structured welding-source peripheral device receives the welding condition item and carries out setting of the welding condition item suitable for the welding source, allowing the welding device to employ for various types of welding source.

A welding device of the present invention has a welding source and a welding-source peripheral device connected to the welding source. The welding source includes a welding-source-name storage section for storing a model name of the welding source and a transmitter for transmitting the model name stored in the welding-source-name storage section. On the other hand, the welding-source peripheral device includes a receiver for receiving the model name fed from the transmitter; a welding-source-name storage section for storing the model name received by the receiver; and a display for displaying the model name stored in the welding-source-name storage section. Such structured the welding-source peripheral device receives a welding condition item and carries out setting of the welding condition item suitable for the welding source, allowing the welding device to employ for various types of welding source.

### BRIEF DESCRIPTION OF THE DRAWINGS

Fig. 1 is a schematic view of a welding device in accordance with a first exemplary embodiment of the present invention.
Fig. 2A is a schematic view of data stored in a storage section of a welding-source peripheral device employed for the welding device of Fig. 1.
Fig. 2B is a schematic view of data stored in a storage section of a welding source employed for the welding device of Fig. 1.
Fig. 2C is a schematic view of data stored in the storage section of the welding-source peripheral device employed for the welding device of Fig. 1.
Fig. 3 is a schematic view of a welding device in accordance with a second exemplary embodiment of the present invention.
Fig. 4 is a schematic view of a welding device in accordance with a third exemplary embodiment of the present invention.
Fig. 5 is a schematic view of a conventional welding device.
Fig. 6 is another schematic view of the conventional welding device.

### REFERENCE MARKS IN THE DRAWINGS

- 1: welding-source peripheral device
- 2: receiver
- 3: peripheral-device-side storage section
- 4: display
- 5: selecting section
- 6: welding source
- 7: welding-source-side storage section
- 8: transmitter
- 9: welding-source-side name-storage section
- 10: peripheral-device-side name-storage section
- 11: manipulator controller
- 12: teaching device
- 13: manipulator control section
- 15: communication path
- 20: welding output section
- 50: welding device

### DETAILED DESCRIPTION OF THE PREFERRED EMBODIMENTS

### (FIRST EXEMPLARY EMBODIMENT)

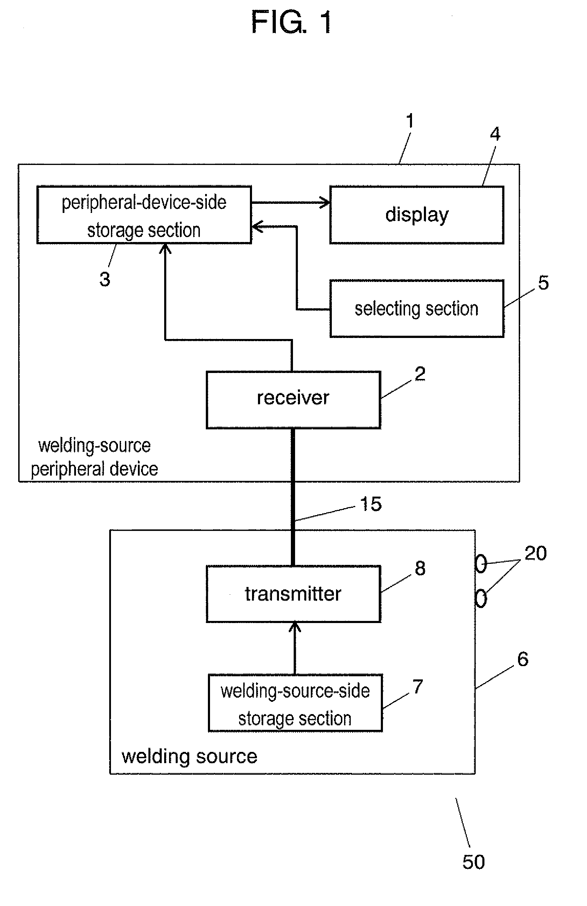

Fig. 1 shows a schematic view of welding device 50 in accordance with the first exemplary embodiment. Welding device 50, as shown in Fig. 1, has welding-source peripheral device 1 (hereinafter, peripheral device 1) and welding source 6. Peripheral device 1 includes receiver 2, peripheral-device-side storage section 3 (hereinafter, storage section 3), display 4 and selecting section 5. Receiver 2 receives welding condition items transmitted from welding source 6. For example, the welding condition item is a welding method, a diameter of a welding wire, welding material of the welding wire or a welding object, wire extension of the welding wire, availability of pulse welding, or the like. Storage section 3 stores welding condition items received by receiver 2. Display 4 displays the welding condition items stored in storage section 3. Selecting a proper item from the welding condition items stored in storage section 3, selecting section 5 carries out setting of welding conditions. On the other hand, welding source 6 includes welding-source-side storage section 7 (hereinafter, storage section 7) and transmitter 8. Storage section 7 stores welding condition items workable on welding source 6. Transmitter 8 transmits the welding condition items stored in storage section 7 to peripheral device 1. Receiver 2 communicates with transmitter 8 via communication path 15.

An example of peripheral device 1 may be a robot controller for controlling a manipulator that holds a welding torch (not shown). Welding device 6 further includes welding output section 20 for feeding power between a welding electrode (not shown) and a welding object (also not shown).

Here will be described the workings of aforementioned welding device 50 having welding source 6 and peripheral device 1.

Welding source 6 is connected to peripheral device 1 via communication path 15. Transmitter 8 transmits all of welding condition items stored in storage section 7 to receiver 2. Storage section 3 of peripheral device 1 stores the welding condition items received by receiver 2.

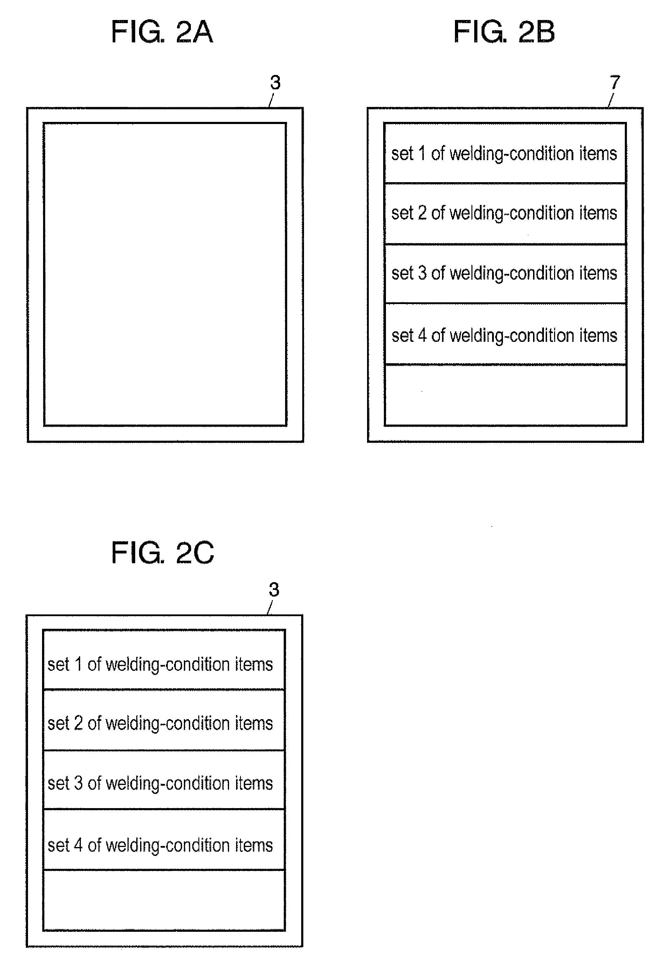

Next will be described the storing process of welding condition items in storage section 3, taking an example with reference to Figs. 2A through 2C. On startup of peripheral device 1, storage section 3 clears a storage area. Fig. 2A shows the state of storage section 3 with no data on welding condition items. On the other hand, Fig. 2B shows a storage area of storage section 7; for example, four sets (set 1 through set 4) of welding condition items are stored in storage section 7. Each set of welding condition items is formed of a combination of welding condition items. All the sets (i.e., set 1 through set 4 of welding condition items) stored in storage section 7 are transmitted to storage section 3 via transmitter 8, communication path 15 and receiver 2. As a result of the transmission above, storage section 3 has set 1 through set 4 of welding condition items, as shown in Fig. 2C. For example, each set of welding condition items includes the welding method, the diameter of the welding wire, the welding material of the welding wire or the welding object, the wire extension of the welding wire, the availability of pulse welding or the like.

Display 4 displays the welding condition items stored in storage section 3. Selecting section 5 selects a proper item from the welding condition items stored in storage section 3 and carries out setting of welding conditions.

Various communication methods, such as a serial communication method and a parallel communication method, can be employed for transmitting/receiving the welding condition items via communication path 15.

Display 4 and selecting section 5 may be formed into an integral component as a display/selecting section (not shown). In this case, the setting of welding condition items may be directly carried out on the welding condition items shown in the display/selecting section.

According to welding device 50 of the embodiment, as described above, welding condition items of welding source 6 are transmitted, as a set of welding condition items, to peripheral device 1 and stored in peripheral device 1. Even when welding source 6 has welding condition items changed or newly added with increase in performance, all the welding condition items of welding source 6 are transmitted to peripheral device 1 and stored there. With the structure above, peripheral device 1 accepts welding source 6-even if added or changed welding condition items are included therein-with no inconveniency as is seen in conventional cases; a repair people has to go to the location of the peripheral device to update the data on welding condition items in the peripheral device. This allows welding source 6 to be easily replaced with a different or an advanced model in production lines.

As discussed above, the welding condition items includes the welding method, the diameter of the welding wire, the welding material of the welding wire or the welding object, the wire extension of the welding wire, the availability of pulse welding or the like. However, there are no limitations in the welding condition items; they can be flexibly determined as necessary. Each item of welding condition items serves as a key item for peripheral device 1 to acquire necessary information from a data table of unified voltage values in welding source 6. According to the selection of welding condition items in peripheral device 1, welding source 6 may transmit data necessary for welding to peripheral device 1.

### (SECOND EXEMPLARY EMBODIMENT)

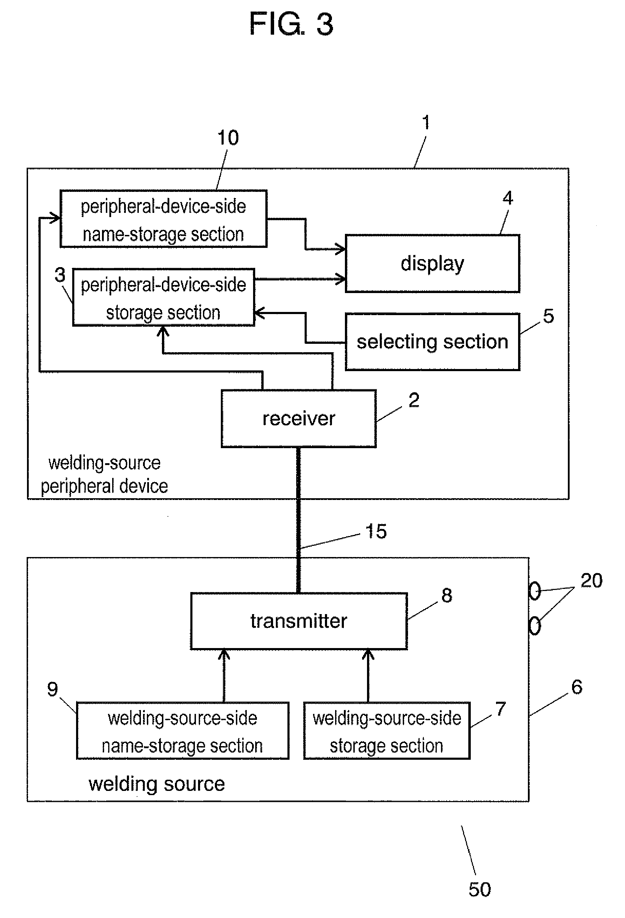

Fig. 3 is a schematic view of welding device 50 in accordance with the second exemplary embodiment. In the structure of the second embodiment, like parts have similar reference numerals as in that of the first exemplary embodiment and the explanation thereof will be omitted. Welding source 50 of the second embodiment differs from the structure of the first embodiment, as shown in Fig. 3, in that welding source 6 has welding-source-name storage section 9 (hereinafter, storage section 9). Furthermore, peripheral device 1 has welding-source-name storage section 10 (hereinafter, storage section 10). Storage section 9 stores a model name of welding source 6. Storage section 10 stores the model name transmitted from welding source 6.

Here will be described the workings of aforementioned welding device 50 having welding source 6 and peripheral device 1.

Welding source 6 is connected to peripheral device 1 via communication path 15. First, transmitter 8 transmits the model name of welding source 6 stored in storage section 9 to receiver 2. Storage section 10 of peripheral device 1 stores the model name received by receiver 2.

Next, transmitter 8 transmits all the welding condition items stored in storage section 7 to receiver 2. Storage section 3 of peripheral device 1 stores the welding condition items received by receiver 2.

After that, display 4 displays the unique model name of welding source 6 stored in storage section 10 and the welding condition items stored in storage section 3.

As described above, the model name of welding source 6 is transmitted to peripheral device 1 and is displayed on the display section of peripheral device 1, by which the operator easily recognizes the model name of welding source 6 connected to peripheral device 1.

Storage section 9 and storage section 7 may be formed into an identical storage section; similarly, storage section 10 and storage section 3 may be formed into an identical storage section.

### (THIRD EXEMPLARY EMBODIMENT)

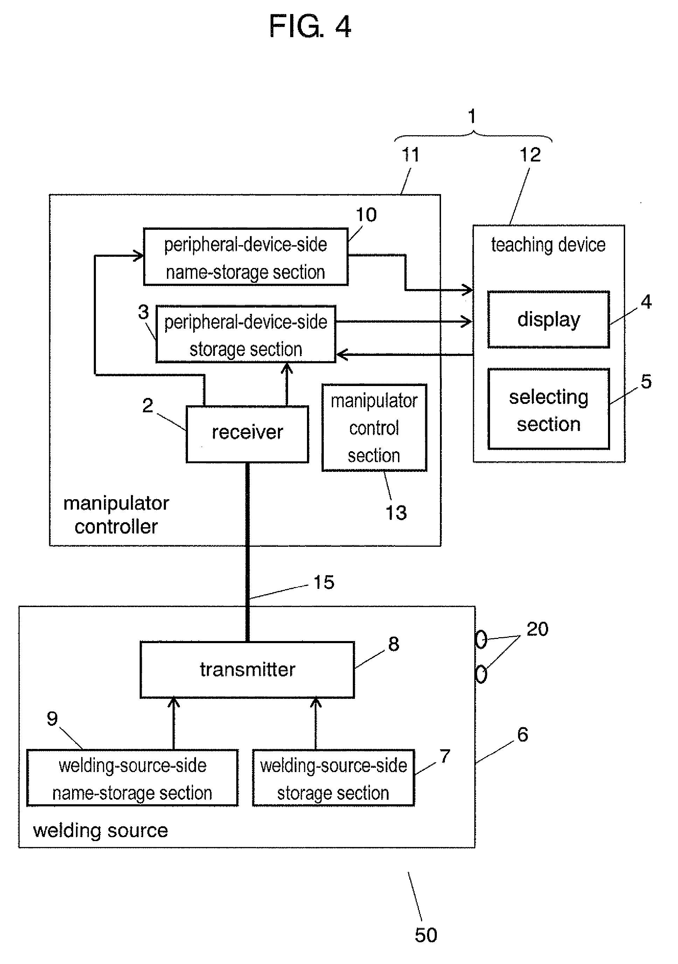

Fig. 4 is a schematic view of welding device 50 in accordance with the third exemplary embodiment. In the structure of the third embodiment, like parts have similar reference numerals as in that of the second exemplary embodiment and the explanation thereof will be omitted. Welding device 50 of the third embodiment differs from the structure in the second embodiment, as shown in Fig. 4, in that peripheral device 1 has manipulator controller 11 (hereinafter, controller 11) and teaching device 12 connected to controller 11. Teaching device 12 has display 4 and selecting section 5. Controller 11 controls a manipulator (not shown) that holds a welding torch (not shown). Controller 11 has manipulator control section 13.

According to welding device 50 of the third embodiment, the welding condition items held in welding source 6 are transmitted to controller 11. With the structure above, controller 11 of peripheral device 1 accepts welding source 6, even if added or changed welding conditions are included therein, and becomes ready for welding. This allows welding source 6 to be easily replaced with a different or an advanced model in production lines.

Display 4 of teaching device 12 displays the unique model name of welding source 6 stored in storage section 10 and the welding condition items stored in storage section 3. Selecting section 5 of teaching device 12 appropriately selects welding conditions of the welding condition items which are stored in storage section 10 and shown on display 4.

Teaching device 12 displays the model name of welding source 6, selects appropriate welding conditions shown on the display section and teaches the manipulator by oneself. This saves time and effort of the operator in entry operations of welding conditions.

Controller 11 and teaching device 12 of the third embodiment are applicable to peripheral device 1 of the first exemplary embodiment.

### INDUSTRIAL APPLICABILITY

According to the welding device having a welding source and a welding-source peripheral device of the present invention, the peripheral device accepts various types of welding source, even if the welding source contains welding conditions changed or newly added with increase in performance. This allows the welding source to be easily replaced with a different or an advanced model in production lines. The present invention is suitable for a welding device having communications capabilities.

## Claims

1. A welding device comprising:
a welding source including:
a welding-source-side storage section for storing a welding condition item; and
a transmitter for transmitting the welding condition item stored in the welding-source-side storage section; and
a welding-source peripheral device including:
a receiver for receiving the welding condition item transmitted from the transmitter;
a peripheral-device-side storage section for storing the welding condition item received by the receiver;
a display for displaying the welding condition item stored in the peripheral-device-side storage section; and
a selecting section for selecting the welding condition item shown on the display.

2. The welding device of claim 1,
wherein the welding condition item includes at least one of a welding method, a diameter of a welding wire, a welding material of the welding wire, a material of a welding object, wire extension of the welding wire, and availability of pulse welding.

3. The welding device of claim 1 or claim 2,
wherein the welding-source peripheral device has
a manipulator controller for controlling a manipulator that holds a welding torch; and
a teaching device connected to the manipulator controller, and the display is disposed on the teaching device.

4. The welding device of claim 1 or claim 2,
wherein the welding source transmits all the welding condition items stored in the welding-source-side storage section to the welding-source peripheral device.

5. The welding device of claim 4,
wherein the welding-source peripheral device has
a manipulator controller for controlling a manipulator that holds a welding torch; and
a teaching device connected to the manipulator controller, and the display is disposed on the teaching device.

6. A welding device comprising:
a welding source including:
a welding-source-side name-storage section for storing a model name of the welding source; and
a transmitter for transmitting the model name stored in the welding-source-side name-storage section; and
a welding-source peripheral device connected to the welding source, the welding-source peripheral device including:
a receiver for receiving the model name transmitted from the transmitter;
a peripheral-device-side name-storage section for storing the model name received by the receiver; and
a display for displaying the model name stored in the peripheral-device-side name-storage section.

7. The welding device of claim 6,
wherein the welding-source peripheral device has
a manipulator controller for controlling a manipulator that holds a welding torch; and
a teaching device connected to the manipulator controller, and the display is disposed on the teaching device.
